# EUROPEAN PATENT SPECIFICATION

(11) **EP 2 523 236 B1**
(45) Date of publication and mention of the grant of the patent: **04.12.2013**
(21) Application number: 12178052.2
(22) Date of filing: 26.02.2009
(51) Int. Cl.: H01M 2/10, H01M 10/50, B60K 1/04, B60L 11/18, B62M 6/90, H01M 10/42

(54) **Battery apparatus**
Batterievorrichtung
Appareil de batterie

(30) Priority: 06.03.2008 JP 2008056760
(43) Date of publication of application: 14.11.2012
(62) Divisional of application: 09718538.3
(73) Proprietor: Kabushiki Kaisha Toshiba, Tokyo 105-8001 (JP)
(72) Inventor: Nakahama, Takafumi, Tokyo, 105-8001 (JP); Mizutani, Mami, Tokyo, 105-8001 (JP); Kakuchi, Takeo, Tokyo, 105-8001 (JP); Ozaki, Tamon, Tokyo, 105-8001 (JP); Muro, Nagaaki, Tokyo, 105-8001 (JP); Domoto, Takafumi, Tokyo, 105-8001 (JP); Hata, Yuusaku, Tokyo, 105-8001 (JP); Monden, Yukitaka, Tokyo, 105-8001 (JP); Koyama, Taihei, Tokyo, 105-8001 (JP); Tonami, Yosuke, Tokyo, 105-8001 (JP)
(74) Representative: Henkel, Breuer & Partner

(56) References cited:
- EP-A1- 1 143 541
- DE-B1- 1 918 726
- GB-A- 693 191
- JP-A- 5 069 870
- JP-A- 2007 213 939

## Description

### Technical Field

The present invention relates to a battery apparatus for use in a vehicle that is not subjected to forced draft.

### Background Art

It has been conventionally known that a plurality of batteries are accommodated in a battery box (see, e.g., JP-A 241700-1996 (KOKAI)).

However, a battery apparatus disclosed in the literature of the conventional technology is not suitable for use in a light vehicle.

For example, since a light vehicle does not include, e.g., a fan that performs forced draft, efficiently cooling the battery apparatus is difficult. When using the battery apparatus in a light vehicle, the battery apparatus is often exposed to outside air. Therefore, temperatures of a plurality of batteries cannot be uniformed. Accordingly, durabilities of the respective batteries are uneven.

JP 5 069870 A discloses a battery device for supplying power to a running motor, arranged in a power unit, being arranged under a step floor. This batter device is a wet secondary battery constituted by providing a plurality of cells in a horizontal direction, so that a plate of the secondary battery is horizontally placed, and mounted on a center frame. In this battery device, a duct having an opening part in both right/left and surfaces of an electric motor-driven motorcycle and also a fan motor and a fan in a rear side of the opening part is connected. This fan motor is driven, for instance, during a charge thus to take in air into the battery device from the opening part discharged from a rear end part of the duct. By this passing air, the battery device is cooled.

### Disclosure of Invention

It is an object of the present invention to provide a battery apparatus suitable for use in a vehicle that is not subjected to forced draft.

According to an aspect of the present invention, there is provided a battery apparatus as set out in claim 1 and a vehicle as set out in claim 2.

### Brief Description of Drawings

Fig. 1 is a structural view showing a structure of a battery apparatus according to a first embodiment not according to the present invention;
Fig. 2 is a structural view showing a structure of a battery apparatus according to a second embodiment not according to the present invention;
Fig. 3 is a structural view showing a structure of a battery apparatus according to a third embodiment not according to the present invention;
Fig. 4 is a structural view showing a structure of a battery apparatus according to a fourth embodiment not according to the present invention;
Fig. 5 is a structural view showing a structure of a battery apparatus according to a fifth embodiment of not according to the present invention;
FIG. 6 is a structural view showing a structure of a battery apparatus according to a sixth embodiment not according to the present invention;
FIG. 7 is a structural view showing a structure of a battery apparatus according to a seventh embodiment not according to the present invention;
FIG. 8 is a structural view showing a structure of a battery apparatus according to an eighth embodiment not according to the present invention; and
FIG. 9 is a structural view showing a structure of a battery apparatus according to the embodiment of the present invention.

### Best Mode for Carrying Out the Invention

Embodiments according to the present invention will now be explained hereinafter with reference to the accompanying drawings.

### (First Embodiment)

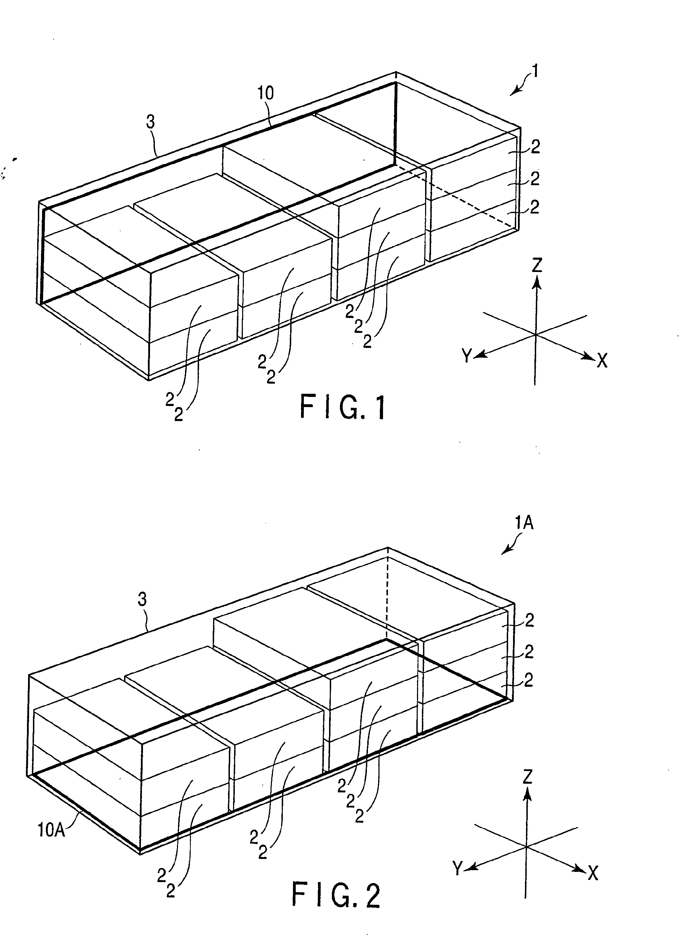

FIG. 1 is a structural view showing a structure of a battery apparatus 1 according to a first embodiment. It is to be noted that like reference numerals denote like parts throughout the drawings, and different parts will be mainly explained. Likewise, in the other embodiments, a repeated explanation will be omitted.

Here, in FIG. 1, in a state where the battery apparatus 1 is mounted in an electric light vehicle, an arrow direction of an axis Z is an upper direction, and an arrow direction of an axis Y is a traveling direction of the electric light vehicle. Further, an axis X, the axis Y, and the axis Z are axes 90 degrees apart, respectively. This can be likewise applied to the other drawings.

The electric light vehicle is a vehicle that is not subjected to forced draft. The electric light vehicle is, e.g., a bicycle. The battery apparatus 1 is mounted below, e.g., a saddle or a rear body of the bicycle. Therefore, the battery apparatus 1 is placed at an environmentally severe position where the battery apparatus 1 is exposed to outside air, for example.

The battery apparatus 1 includes 10 batteries 2, a battery box 3 that accommodates the 10 batteries 2, and a heat equalizing plate 10.

The battery 2 has a substantially rectangular parallelepiped shape. In regard to the 10 batteries, four batteries are aligned in the direction of the axis Y, and they are stacked in three tiers, i.e., an upper tier, a middle tier, and a lower tier. Each non-illustrated spacer is provided between the batteries 2 in the upper tier and the batteries 2 in the middle tier and between the batteries 2 in the middle tier and the batteries 2 in the lower tier. That is, each spacer is provided between the respective tiers.

The battery box 3 is a box accommodating the batteries 2, and other parts. The battery box 3 has a substantially rectangular parallelepiped shape.

The battery apparatus 1 has a space corresponding to two batteries 2 formed in the upper tier of the stacked batteries 2 in the battery box 3. Although not shown, for example, an electronic circuit such as a control circuit that controls the battery apparatus 1 is accommodated in this space.

The heat equalizing plate 10 is disposed to come into contact with all the 10 batteries 2. Specifically, the heat equalizing plate 10 is arranged to come into contact with bottom surfaces of all the batteries 2 in the battery box 3. Here, the bottom surface of the battery 2 is a surface that has the same orientation as the axis X in the state of the battery 2 depicted in FIG. 1.

In this embodiment, the following functions and effects can be obtained.

The battery 2 generates heat when energized. At this time, a temperature of the battery 2 fluctuates depending on the position where the battery 2 is located.

Thus, the heat equalizing plate 10, which has an excellent thermal conduction property, is arranged to come into contact with all the batteries 2 in the battery apparatus 1. As a result, fluctuations in temperature between each battery 2 can be reduced.

Therefore, the battery apparatus 1 can be a battery apparatus suitable for use in an electric light vehicle.

### (Second Embodiment)

FIG. 2 is a structural view showing a structure of a battery apparatus 1A according to a second embodiment. The battery apparatus 1A has a heat equalizing plate 10A provided in place of the heat equalizing plate 10 in the battery apparatus 1 according to the first embodiment depicted in FIG. 1. Other points are the same as for the battery apparatus 1.

The heat equalizing plate 10A is disposed to come into contact with all batteries 2 placed in the lowermost tier. Specifically, the heat equalizing plate 10A is arranged to come into contact with lower surfaces of four batteries 2 placed in the lowermost tier.

According to this embodiment, the following functions and effects can be obtained.

The battery apparatus 1A mounted in an electric light vehicle receives an air stream from the arrow direction of the axis Y when the electric light vehicle travels. As a result, each battery 2 disposed in the arrow direction (a front wheel side) of the axis Y of the battery apparatus 1A is apt to be cooled. On the other hand, cooling of each battery 2 disposed on an opposite side (a rear wheel side) of the arrow direction of the axis Y of the battery apparatus 1A is difficult. Therefore, the batteries 2 have unevenness in temperature depending on their location in the direction of the axis Y of the battery apparatus 1.

Thus, the heat equalizing plate 10A is disposed in the battery apparatus 1A to come into contact with all the batteries 2 placed in the lowermost tier. As a result, it is possible to suppress unevenness in temperature of the batteries 2 due to their location in the direction of the axis Y of the battery apparatus 1.

### (Third Embodiment)

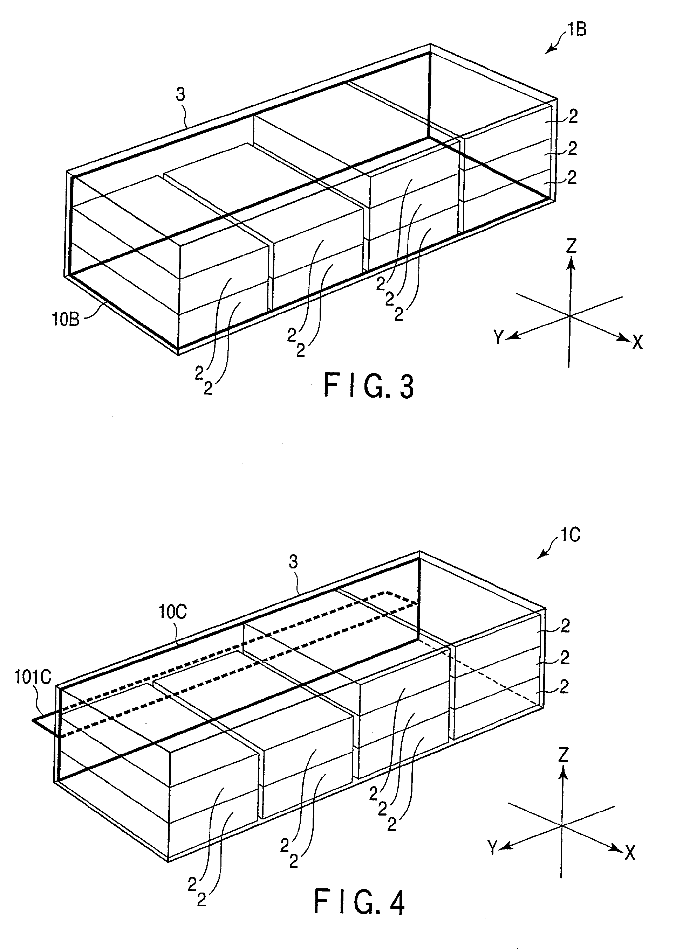

FIG. 3 is a structural view showing a structure of a battery apparatus 1B according to a third embodiment of the present invention. The battery apparatus 1B has a heat equalizing plate 10B provided in place of the heat equalizing plate 10 in the battery apparatus 1 according to the first embodiment depicted in FIG. 1. Other points are the same as for the battery apparatus 1.

The heat equalizing plate 10B is a flat L-shaped plate. The heat equalizing plate 10B includes a surface placed on a side surface of a battery box 3 in the direction of the axis X and a surface placed on a lower surface of the battery box 3. That is, the heat equalizing plate 10B has such a shape as a combination of the heat equalizing plate 10 according to the first embodiment depicted in FIG. 1 and the heat equalizing plate 10A according to the second embodiment depicted in FIG. 2.

According to this embodiment, providing the heat equalizing plate 10B enables obtaining the functions and effects of each of the first embodiment and the second embodiment.

### (Fourth Embodiment)

FIG. 4 is a structural view showing a structure of a battery apparatus 1C according to a fourth embodiment.

The battery apparatus 1C has a heat equalizing plate 10C provided in place of the heat equalizing plate 10 in the battery apparatus 1 according to the first embodiment depicted in FIG. 1. Other points are the same as for the battery apparatus 1.

The heat equalizing plate 10C has a shape obtained by disposing a planar portion 101C to the heat equalizing plate 10, the planar portion 101C being vertical to the heat equalizing plate 10. Therefore, the heat equalizing plate 10C has a T-like shape. It is to be noted that the heat equalizing plate 10C may have an L-like shape by disposing the planar portion 101C to a portion corresponding to an end portion of the heat equalizing plate 10. The planar portion 101C of the heat equalizing plate 10C protrudes toward the outside from an opening portion provided in a battery box 3.

According to this embodiment, it is possible to obtain the following functions and effects in addition to the functions and effects according to the first embodiment.

Batteries 2 in the battery apparatus 1C can be directly cooled by outside air by protruding the planar portion 101C of the heat equalizing plate 10C toward the outside of the battery box 3. Therefore, the planar portion 101C functions as a radiator plate, thereby effectively suppressing an increase in temperature of the batteries 2.

### (Fifth Embodiment)

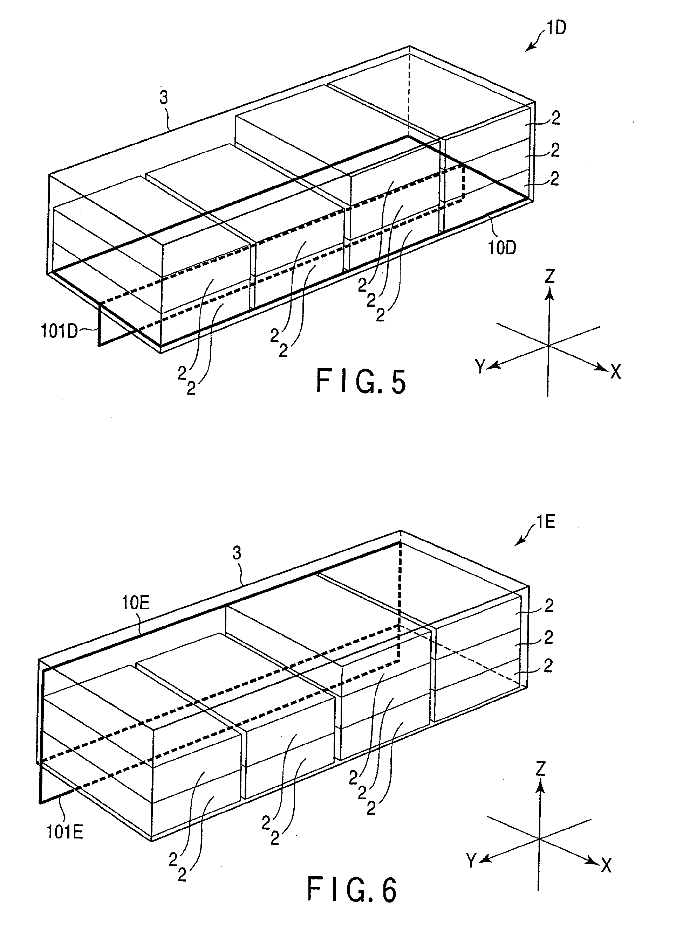

FIG. 5 is a structural view showing a structure of a battery apparatus 1D according to a fifth embodiment.

The battery apparatus 1D has a heat equalizing plate 10D provided in place of the heat equalizing plate 10A in the battery apparatus 1A according to the second embodiment depicted in FIG. 2. Other points are the same as for the battery apparatus 1A.

The heat equalizing plate 10D has a shape obtained by disposing a planar portion 101D to the heat equalizing plate 10A depicted in FIG. 2, the planar portion 101D being vertical to the heat equalizing plate 10A. Therefore, the heat equalizing plate 10D has a T-like shape. It is to be noted that the heat equalizing plate 10D may have an L-like shape by disposing the planar portion 101D to a portion corresponding to an end portion of the heat equalizing plate 10A. The planar portion 101D of the heat equalizing plate 10D protrudes toward the outside from an opening portion provided in a battery box 3.

According to this embodiment, it is possible to obtain the following functions and effects in addition to the functions and effects according to the second embodiment.

Batteries 2 in the battery apparatus 1D can be directly cooled by outside air by protruding the planar portion 101D of the heat equalizing plate 10D toward the outside of the battery box 3. Therefore, the planar portion 101D functions as a radiator plate, thereby effectively suppressing an increase in temperature of the batteries 2.

### (Sixth Embodiment)

FIG. 6 is a structural view showing a structure of a battery apparatus 1E according to a sixth embodiment.

The battery apparatus 1E has a heat equalizing plate 10E provided in place of the heat equalizing plate 10 in the battery apparatus 1 according to the first embodiment depicted in FIG. 1. Other points are the same as in the battery apparatus 1.

The heat equalizing plate 10E has a shape obtained by extending the heat equalizing plate 10 depicted in FIG. 1 toward the lower side. Therefore, the heat equalizing plate 10E has a shape formed in one plane. The heat equalizing plate 10E has a shape including a planar portion 101E protruding toward the outside from an opening portion provided in a battery box 3.

According to this embodiment, it is possible to obtain the following functions and effects in addition to the functions and effects according to the first embodiment.

Batteries 2 in the battery apparatus 1E can be directly cooled by outside air by protruding the planar portion 101E of the heat equalizing plate 10E toward the outside of the battery box 3. Therefore, the planar portion 101E functions as a radiator plate, thereby effectively suppressing an increase in temperature of the batteries 2.

Further, the heat equalizing plate 10E has a shape based on one plane, thus reducing a manufacturing cost in, e.g., processing.

### (Seventh Embodiment)

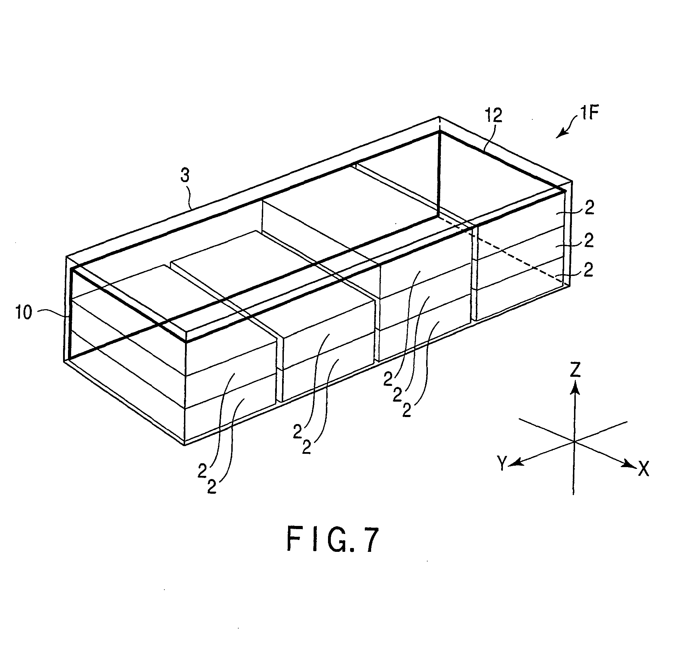

FIG. 7 is a structural view showing a structure of a battery apparatus 1F according to a seventh embodiment.

The battery apparatus 1F has a heat insulating material 12 additionally provided in the battery apparatus 1 according to the first embodiment depicted in FIG. 1. Other points are the same as in the battery apparatus 1.

The heat insulating material 12 is provided between batteries placed in the uppermost tier and an upper surface of a battery box 3. The heat insulating material 12 covers upper surfaces of all the stacked batteries 2. The heat insulating material 12 plays a role of inhibiting thermal conduction properties from the upper surface of the battery box 3 to the batteries 2.

According to this embodiment, it is possible to obtain the following functions and effects in addition to the functions and effects according to the first embodiment.

The upper surface of the battery apparatus 1F may be directly exposed to the sunlight in a state where the battery apparatus 1F is mounted in an electric light vehicle. Therefore, a temperature of the upper surface of the battery box 3 is increased due to solar insolation. Thus, providing the heat insulating material 12 between the batteries 2 and the upper surface of the battery box 3 enables suppressing an increase in temperature of the battery 2 due to solar insolation.

### (Eighth Embodiment)

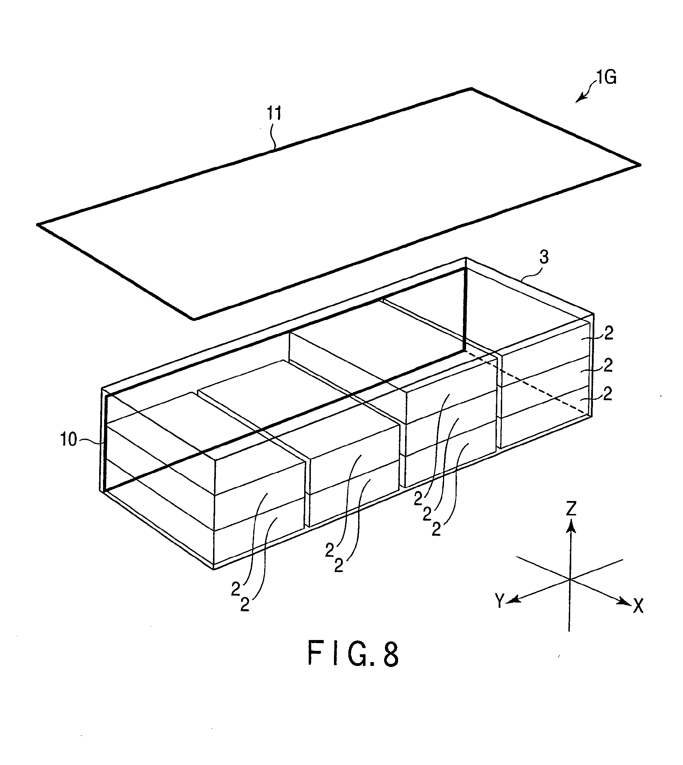

FIG. 8 is a structural view showing a structure of a battery apparatus 1G according to an eighth embodiment.

The battery apparatus 1G has a sunshade 11 additionally provided in the battery apparatus 1 according to the first embodiment depicted in FIG. 1. Other points are the same as in the battery apparatus 1.

The sunshade 11 is provided above a battery box 3. The sunshade 11 plays a role of blocking out direct sunlight shining toward the battery box 3.

According to this embodiment, it is possible to obtain the following functions and effects in addition to the functions and effects according to the first embodiment.

An upper surface of the battery apparatus 1G may be directly exposed to the sunlight in a state where the battery apparatus 1G is mounted in an electric light vehicle. Therefore, a temperature of the battery box 3 is increased due to the sunlight. Thus, providing the sunshade 11 above the battery box 3 enables suppressing an increase in temperature of the battery box 3 due to solar insolation. As a result, an increase in temperature of batteries 2 can be also suppressed. Accordingly, an increase in temperature of the entire battery apparatus 1G can be suppressed.

### (Ninth Embodiment)

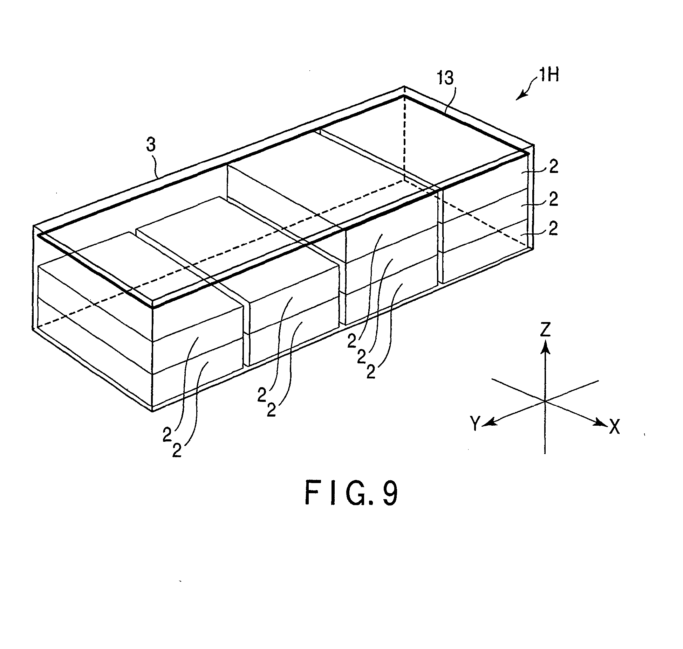

FIG. 9 is a structural view showing a structure of a battery apparatus 1H according to the embodiment of the present invention.

The battery apparatus 1H has a heater 13 provided in place of the heat equalizing plate 10 in the battery apparatus 1 according to the first embodiment depicted in FIG. 1. Other points are the same as in the battery apparatus 1.

The heater 13 covers entire upper surfaces of stacked batteries 2. The heater 13 is encapsulated by an elastic body, e.g., rubber. The heater 13 has a tabular shape.

It is difficult for the battery 2 to exercise its performance when its temperature is lowered in cold climates. In such a situation, the heater 13 heats the batteries 2. As a result, temperatures of the batteries 2 are increased to a temperature level for the required performance.

Furthermore, the heater 13 is encapsulated by the elastic body, e.g., a rubber. As a result, it has a role like the heat insulating material 12 in the seventh embodiment.

According to this embodiment, providing the heater 13 enables obtaining the same functions and effects as those of the heat insulating material 12 in the seventh embodiment. Moreover, providing the heater 13 enables increasing temperatures of the batteries 2 to a temperature level for the required performance, whereby the battery apparatus 1H can have a structure suitable for cold regions.

It is to be noted that the battery apparatus 1 is configured by using the 10 batteries 2 in each embodiment, the number of the batteries 2 is not restricted to 10. As the number of the batteries 2 to be used, any number is satisfactory as long as it is two or above.

In the sixth embodiment, the heat equalizing plate 10E having a shape obtained by extending the end portion of the heat equalizing plate 10 in the first embodiment is provided. Likewise, a heat equalizing plate having a shape obtained by extending the end portion of the heat equalizing plate 10A in the second embodiment may be provided. As a result, the same functions and effects as those of each of the second embodiment and the sixth embodiment can be obtained.

Although the structure which the heat insulting material 12 is additionally provided to the battery apparatus 1 in the first embodiment has been explained in the seventh embodiment, the present invention is not restricted thereto. The heat insulating material 12 can be likewise configured in the battery apparatus according to any other embodiment. Additionally, the heat insulating material 12 can be configured in the same manner even if the heater 13 in the ninth embodiment is used instead.

Additional advantages and modifications will readily occur to those skilled in the art.

### Industrial Applicability

According to the present invention, it is possible to provide a battery apparatus suitable for use in a vehicle that is not subjected to forced draft.

## Claims

1. A battery apparatus (1) mounted in a vehicle that is not subjected to forced draft, comprising:
a plurality of rectangular parallelepiped batteries (2) stacked in a direction vertical to a traveling direction of the vehicle; and
a rectangular parallelepiped battery box (3) that accommodates the plurality of rectangular parallelepiped batteries (2) therein;
**characterized by**
a heater (13) that is brought into contact with and covers upper surfaces of rectangular parallelepiped batteries (2) placed in an uppermost tier in a state where the battery apparatus (1) is mounted in the vehicle, whereby the heater heats the rectangular parallelepiped batteries (2) that are in contact therewith, and the heater is encapsulated by an elastic body, wherein the heater is configured as heat insulating means.

2. A vehicle in which the battery apparatus recited in claim 1 is mounted.

## Patentansprüche

1. Batterievorrichtung (1), die an einem Fahrzeug angebracht ist, und die keiner Frischluft ausgesetzt ist, aufweisend:
eine Vielzahl von rechteckigen parallelflachen Batterien (2), die in einer Richtung vertikal zu einer Fahrtrichtung des Fahrzeugs gestapelt sind; und
ein rechteckiger parallelflacher Batteriekasten (3), der die Vielzahl von rechteckigen parallelflachen Batterien (2) darin aufnimmt;
**gekennzeichnet durch**
einen Erhitzer (13), der die oberen Oberflächen der rechteckigen parallelflachen Batterien (2) kontaktiert und bedeckt, die in einer obersten Reihe in einem Zustand angeordnet sind, in welchem die Batterievorrichtung (1) an dem Fahrzeug angebracht ist, wobei der Erhitzer die rechteckigen parallelflachen Batterien (2) erhitzt, die damit in Kontakt sind, und der Erhitzer in einen elastischen Körper eingebettet ist, wobei der Erhitzer als Hitzeisolationseinrichtung konfiguriert ist.

2. Fahrzeug, in welchem die Batterievorrichtung nach Anspruch 1 angebracht ist.

## Revendications

1. Appareil de batterie (1) monté sur un véhicule qui n'est pas soumis à l'amenée d'air forcée, comprenant :
une pluralité de batteries parallélépipèdes rectangulaires (2) empilées dans une direction verticale par rapport à une direction de déplacement du véhicule ; et
un boîtier de batterie (3) parallélépipède rectangulaire qui loge la pluralité de batteries parallélépipèdes rectangulaires (2) à l'intérieur de ce dernier ;
**caractérisé par** :
un dispositif de chauffage (13) qui est amené en contact avec et recouvre des surfaces supérieures de batteries parallélépipèdes rectangulaires (2) placées au niveau le plus haut dans un état dans lequel l'appareil de batterie (1) est monté sur le véhicule, moyennant quoi le dispositif de chauffage chauffe les batteries parallélépipèdes rectangulaires (2) qui sont en contact avec ce dernier, et le dispositif de chauffage est encapsulé par un corps élastique, dans lequel le dispositif de chauffage est configuré comme un moyen calorifuge.

2. Véhicule dans lequel est monté l'appareil de batterie selon la revendication 1.
